# EUROPEAN PATENT APPLICATION

(11) **EP 4 615 146 A1**
(43) Date of publication of application: **10.09.2025**
(21) Application number: 22963841.6
(22) Date of filing: 01.11.2022
(51) Int. Cl.: H04W 76/14

(54) **METHOD FOR TRANSMITTING SIDELINK POSITIONING MESSAGE, METHOD FOR RECEIVING SIDELINK POSITIONING MESSAGE, AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/129078
(87) International publication number: WO 2024/092523

(57) **Abstract**

The embodiments of the present application can be applied to the technical field of communications. Disclosed are a method for transmitting a determined sidelink positioning message, a method for receiving a determined sidelink positioning message, and an apparatus. The method for transmitting a determined sidelink positioning message comprises: a transmitting terminal device may transmit to a receiving terminal device a sidelink positioning message carrying a serial number, so that upon receiving a sidelink positioning message with the same serial number, the receiving terminal device discards the currently received sidelink positioning message, thereby achieving repeated detection, and preventing a sidelink positioning message from being repeatedly received.

## Description

### TECHNICAL FIELD

The present disclosure relates to, but is not limited to, the field of communication technology, and specifically to a method and apparatus for sending a sidelink positioning message, and a method and apparatus for receiving a sidelink positioning message.

### BACKGROUND

At present, positioning of terminals can be achieved based on a sidelink (SL) between terminals. The positioning based on the sidelink includes absolute positioning, relative positioning and ranging. In the above positioning, the terminals interact with each other through sidelink positioning messages adopting a sidelink positioning protocol/ranging and sidelink positioning protocol (SLPP/RSPP), to achieve the positioning.

### SUMMARY

Embodiments of the present disclosure provide a method and apparatus for sending a sidelink positioning message, and a method and apparatus for receiving a sidelink positioning message, which may be applied to the field of communication technology. A sending terminal may send a sidelink positioning message carrying a serial number to a receiving terminal, so that when the receiving terminal receives sidelink positioning messages with the same serial number, the receiving terminal may discard the sidelink positioning message currently received, thereby realizing duplicate detection and avoiding repeated reception of the sidelink positioning message.

According to a first aspect of the embodiments of the present disclosure, a method for sending a sidelink positioning message is provided, performed by a sending terminal, including: sending the sidelink positioning message carrying a serial number to a receiving terminal.

In this embodiment of the present disclosure, the sending terminal may send the sidelink positioning message carrying the serial number to the receiving terminal, so that when the receiving terminal receives sidelink positioning messages with the same serial number, the receiving terminal may discard the currently received sidelink positioning message, thereby realizing duplicate detection and avoiding repeated reception of the sidelink positioning message.

According to a second aspect of the embodiments of the present disclosure, a method for receiving a sidelink positioning message is provided, performed by a receiving terminal, including: receiving the sidelink positioning message carrying a serial number sent by a sending terminal.

In this embodiment of the present disclosure, the receiving terminal may receive the sidelink positioning message carrying the serial number sent by the sending terminal, so that when the receiving terminal receives sidelink positioning messages with the same serial number, the receiving terminal may discard the currently received sidelink positioning message, thereby realizing duplicate detection and avoiding repeated reception of the sidelink positioning message.

According to a third aspect of the embodiments of the present disclosure, a communication apparatus is provided. The communication apparatus has some or all of the functions of the sending terminal in the method embodiment in the first aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the communication apparatus may include a transceiver unit and a processing unit, in which the processing unit is configured to support the communication apparatus to perform the corresponding functions in the above method, the transceiver unit is configured to support a communication between the communication apparatus and other devices. The communication apparatus may also include a storage unit, in which the storage unit is configured to couple with the transceiver unit and the processing unit, and save a computer program and data necessary for the communication apparatus.

As an example, the processing unit may be a processor, the transceiver unit may be a transceiver or a communication interface, and the storage unit be a memory.

According to a fourth aspect of the embodiments of the present disclosure, a communication apparatus is provided. The communication apparatus has some or all of the functions of the receiving terminal in the method embodiment in the second aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the communication apparatus may include a transceiver unit and a processing unit, in which the processing unit is configured to support the communication apparatus to perform the corresponding functions in the above method, the transceiver unit is configured to support a communication between the communication apparatus and other devices. The communication apparatus may also include a storage unit, in which the storage unit is configured to couple with the transceiver unit and the processing unit, and save a computer program and data necessary for the communication apparatus.

As an example, the processing unit may be a processor, the transceiver unit may be a transceiver or a communication interface, and the storage unit be a memory.

According to a fifth aspect of the embodiments of the present disclosure, a communication apparatus including a processor. When a computer program stored in a memory is called by the processor, the method described in the first aspect is implemented.

According to a sixth aspect of the embodiments of the present disclosure, a communication apparatus including a processor. When a computer program stored in a memory is called by the processor, the method described in the second aspect is implemented.

According to a seventh aspect of the embodiments of the present disclosure, a communication apparatus including a processor and a memory for storing a computer program is provided. When the computer program stored in a memory is executed by the processor, the communication apparatus is caused to implement the method described in the first aspect.

According to an eighth aspect of the embodiments of the present disclosure, a communication apparatus including a processor and a memory for storing a computer program is provided. When the computer program stored in a memory is executed by the processor, the communication apparatus is caused to implement the method described in the second aspect.

According to a ninth aspect of the embodiments of the present disclosure, a communication apparatus is provided, including a processor and an interface circuit for receiving code instructions and sending the code instructions to the processor, in which the processor is configured to execute the code instructions to cause the apparatus to perform the method described in the first aspect.

According to a tenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the method described in the second aspect.

According to an eleventh aspect of the embodiments of the present disclosure, a communication system is provided, in which the system includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

According to a twelfth aspect of the embodiments of the present disclosure, a computer-readable storage medium for storing instructions used by the sending terminal is provided. When the instructions are executed, the sending terminal is caused to implement the method described in the first aspect.

According to a thirteenth aspect of the embodiments of the present disclosure, a computer-readable storage medium for storing instructions used by the receiving terminal is provided. When the instructions are executed, the receiving terminal is caused to implement the method described in the second aspect.

According to a fourteenth aspect of the embodiments of the present disclosure, a computer program product including a computer program is provided. When the computer program is running on a computer, the computer is caused to perform the method described in the first aspect.

According to a fifteenth aspect of the embodiments of the present disclosure, a computer program product including a computer program is provided. When the computer program is running on a computer, the computer is caused to perform the method described in the second aspect.

According to a sixteenth aspect of the embodiments of the present disclosure, a chip system is provided, including at least one processor and an interface configured to support the sending terminal to perform the functions in the first aspect, for example, at least one of determining or processing data and information in the above method. In one possible design, the chip system also includes a memory for saving a computer program and data necessary for the source secondary node. The chip system may include a chip, or a chip and other discrete devices.

According to a seventeenth aspect of the embodiments of the present disclosure, a chip system is provided, including at least one processor and an interface configured to support the receiving terminal to perform the functions in the second aspect, for example, at least one of determining or processing data and information in the above method. In one possible design, the chip system also includes a memory for saving a computer program and data necessary for the source secondary node. The chip system may include a chip, or a chip and other discrete devices.

According to an eighteenth aspect of the embodiments of the present disclosure, a computer program is provided. When the computer program is running on a computer, the computer is caused to implement the method described in the first aspect.

According to a nineteenth aspect of the embodiments of the present disclosure, a computer program is provided. When the computer program is running on a computer, the computer is caused to implement the method described in the second aspect.

### BRIEF DESCRIPTION OF THE DRAWINGS

In order to clearly illustrate technical solutions of the embodiments and the background of the present disclosure, a brief description of drawings used in embodiments and the background is given below.
FIG. 1 is a schematic diagram of a communication system according to an embodiment of the present disclosure;
FIG. 2 is a schematic diagram of a positioning method based on downlink-time difference of arrival according to an embodiment of the present disclosure;
FIG. 3 is a flowchart of a method for sending a sidelink positioning message according to an embodiment of the present disclosure;
FIG. 4 is a flowchart of a method for sending a sidelink positioning message according to an embodiment of the present disclosure;
FIG. 5 is a flowchart of a method for sending a sidelink positioning message according to an embodiment of the present disclosure;
FIG. 6 is a flowchart of a method for sending a sidelink positioning message according to an embodiment of the present disclosure;
FIG. 7 is a flowchart of a method for sending a sidelink positioning message according to an embodiment of the present disclosure;
FIG. 8 is a flowchart of a method for sending a sidelink positioning message according to an embodiment of the present disclosure;
FIG. 9 is a flowchart of a method for receiving a sidelink positioning message according to an embodiment of the present disclosure;
FIG. 10 is a flowchart of a method for receiving a sidelink positioning message according to an embodiment of the present disclosure;
FIG. 11 is a flowchart of a method for receiving a sidelink positioning message according to an embodiment of the present disclosure;
FIG. 12 is a flowchart of a method for receiving a sidelink positioning message according to an embodiment of the present disclosure;
FIG. 13 is a flowchart of a method for receiving a sidelink positioning message according to an embodiment of the present disclosure;
FIG. 14 is a flowchart of a method for receiving a sidelink positioning message according to an embodiment of the present disclosure;
FIG. 15 is a block diagram of a communication apparatus according to an embodiment of the present disclosure;
FIG. 16 is a block diagram of a communication apparatus according to an embodiment of the present disclosure;
FIG. 17 is a block diagram of a chip according to an embodiment of the present disclosure.

### DETAILED DESCRIPTION

In order to better understand a method and apparatus for sending a sidelink positioning message, and a method and apparatus for receiving a sidelink positioning message in the embodiments of the present disclosure, a communication system to which the embodiments of the present disclosure are applicable is firstly described as follows.

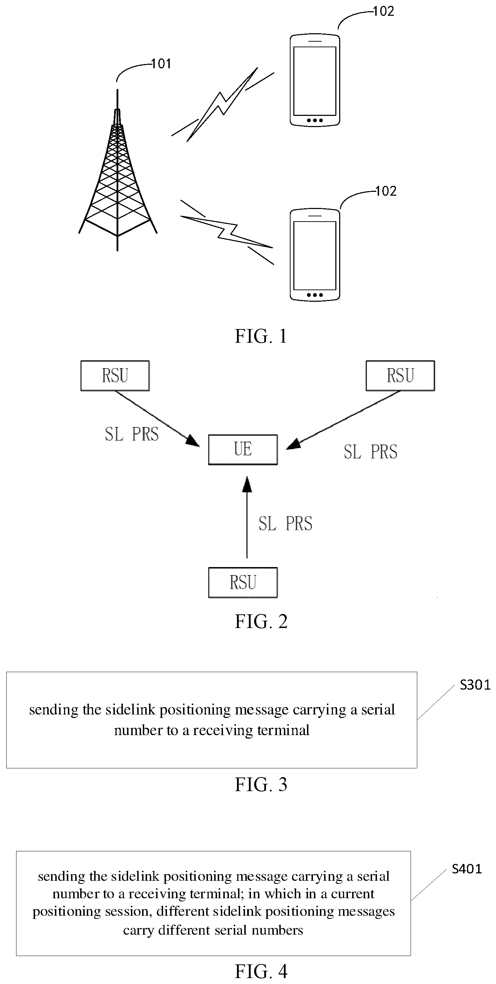

Please refer to FIG. 1, which is a schematic diagram of a communication system according to an embodiment of the present disclosure. The communication system may include, but is not limited to, one network device and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including one network device 101 and one terminal 12 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future. It should be noted that the sidelink in the embodiments of the present application may also be called a side link or a direct link.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

At present, positioning of terminals can be achieved based on a sidelink (SL) between terminals. The positioning based on the sidelink includes absolute positioning, relative positioning and ranging. In the above positioning, the terminals interact with each other through sidelink positioning messages adopting a sidelink positioning protocol/ranging and sidelink positioning protocol (SLPP/RSPP), to achieve the positioning. The absolute positioning is used to determine absolute coordinates of the terminal, the relative positioning is used to determine coordinates of the terminal relative to a reference point, and the ranging is used to determine a distance and/or angle of the terminal relative to a reference point.

The ranging may usually involve two terminals to participate in ranging, and the absolute positioning and the relative positioning may usually involve multiple terminals to participate in positioning.

As shown in FIG. 2, which shows a positioning method based on downlink-time difference of arrival (DL-TDOA). In this method, a terminal, such as a user equipment (UE), may determine a specific position of the UE relative to multiple road side units (RSUs) by measuring positioning messages sent by the multiple RSUs through the sidelink. In addition to DL-TDOA, the positioning solutions also include uplink-time difference of arrival (UL-TDOA), multiple round-trip time (multiple RTT), angle of arrival (AOA)/angle of departure (AOD), carrier phase positioning, etc.

If a positioning result is not converted into absolute position coordinates based on absolute position information of the RSU, etc., then the positioning result involves the relative positioning; otherwise, it involves the absolute positioning. The UE being positioned is a target UE, and other UEs that support positioning the target UE are anchor UEs. If the positioning involves only two UEs, they are each other's anchor UEs.

There are different types of anchor UEs. For example, the RSU-type anchor UE belongs to an infrastructure, which may provide positioning services by collaborating with other RSUs. For example, an ordinary mobile terminal UE may also be used as an anchor UE, but it is difficult to assist in providing positioning services with other UEs. In addition, some anchor UEs have location information such as GPS, which may assist other UEs in the absolute positioning. Some other anchor UEs may not have location information such as GPS.

For the ranging or the relative positioning, sometimes it is not only desirable to obtain a distance, angle or relative position between two UEs, but also desirable to obtain a distance, angle or relative position between one UE and a group of UEs. This type of positioning that a positional relationship between one UE and a group of UEs needs to be measured is called group positioning.

In the above-mentioned types of positioning, there may be a situation where the sidelink positioning message is received repeatedly, and there is a lack of a duplicate detection mechanism for the sidelink positioning message.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

It should be noted that the sending terminal described in any embodiment of the present disclosure is a terminal for sending a sidelink positioning message, and may refer to, for example, the terminal 102 in the communication system shown in FIG. 1, or to the UE or RSU shown in FIG. 2. The receiving terminal described in any embodiment of the present application is a terminal for receiving a sidelink positioning message, and may refer to, for example, the terminal 102 in the communication system shown in FIG. 1, or to the UE or RSU shown in FIG. 2.

It should be noted that the method for sending a sidelink positioning message provided in any embodiment of the present disclosure may be performed alone, or in combination with possible implementation methods in other embodiments, or in combination with any technical solution in the related technology.

It should be noted that the method for receiving a sidelink positioning message provided in any embodiment of the present disclosure may be performed alone, or in combination with possible implementation methods in other embodiments, or in combination with any technical solution in the related technology.

The method and apparatus for sending a sidelink positioning message, and the method and apparatus for receiving a sidelink positioning message provided in the embodiments of the present disclosure will now be further described with reference to the accompanying drawings.

With reference to FIG. 3, FIG. 3 is a flowchart of a method for sending a sidelink positioning message according to an embodiment of the present disclosure. The method is performed by a sending terminal. As shown in FIG. 3, the method in this embodiment may include, but is not limited to, the following steps.

At step S301, a sidelink positioning message carrying a serial number is sent to a receiving terminal.

In the embodiments of the present disclosure, the sending terminal may refer to a terminal that sends the sidelink positioning message. The receiving terminal may refer to a terminal that receives the sidelink positioning message. If a terminal only sends messages during a sidelink positioning process, the terminal may be a sending terminal. If a terminal only receives messages during the sidelink positioning process, the terminal may be a receiving terminal. If a terminal both sends and receives messages during the sidelink positioning process, the terminal may be used as both a sending terminal and a receiving terminal. When the terminal is used as both a sending terminal and a receiving terminal, the message sent when it is used as the sending terminal is different from the message received when it is used as the receiving terminal.

In the embodiments of the present disclosure, the sidelink positioning message refers to a message exchanged between at least two terminals involved in a terminal positioning process. In an example, a receiving address of the receiving terminal in the sidelink positioning message may be a device identification of the receiving terminal. In another example, the receiving address of the receiving terminal in the sidelink positioning message may be any of: a unicast address, a groupcast address (also called multicast address), or a broadcast address. The unicast address, the groupcast address, and the broadcast address are represented by a destination layer 2 identification (ID).

In the embodiments of the present disclosure, in an example, the process of the sending terminal executing the step S301 may include, for example, sending the sidelink positioning message carrying the serial number to the receiving terminal in response to the receiving address of the receiving terminal being a unicast address, a groupcast address, or a broadcast address. That is, in the case that the receiving address in the sidelink positioning message to be sent is a unicast address, a groupcast address, or a broadcast address, the sending terminal may carry the serial number in the sidelink positioning message.

The sidelink positioning message may be a message using a sidelink positioning protocol/ranging and sidelink positioning protocol (SLPP/RSPP), for example, an SLPP message or an RSPP message. For example, in the case that the receiving address in the SLPP/RSPP message to be sent is a unicast address, a groupcast address, or a broadcast address, the sending terminal may carry the serial number in the SLPP/RSPP message.

In this example, the sending terminal determines a sidelink positioning message to be sent, selects an unused serial number from a resource pool of serial numbers, and adds the unused serial number to the sidelink positioning message. When the sending terminal needs to send another sidelink positioning message, it selects another unused serial number from the resource pool, and adds the another unused serial number to the another sidelink positioning message.

In another example, the process of the sending terminal executing the step S301 may include, for example, in response to the receiving address of the receiving terminal being a unicast address, sending the sidelink positioning message carrying the serial number to the receiving terminal. That is, in the case that the receiving address of the receiving terminal is a unicast address, the sending terminal may carry the serial number in the sidelink positioning message; in the case that the receiving address of the receiving terminal is a groupcast address or a broadcast address, the sending terminal may not carry the serial number in the sidelink positioning message.

The sidelink positioning message may be an SLPP message or an RSPP message. For example, in the case that the receiving address in the SLPP/RSPP message to be sent is a unicast address, the sending terminal may carry the serial number in the SLPP/RSPP message; in the case that the receiving address in the SLPP/RSPP message to be sent is a groupcast address or a broadcast address, the sending terminal may not carry the serial number in the SLPP/RSPP message.

In this example, the sending terminal determines a sidelink positioning message to be sent. If the receiving address of the receiving terminal is a unicast address, the sending terminal selects an unused serial number from the resource pool of serial numbers and adds the unused serial number to the sidelink positioning message. When the sending terminal needs to send another sidelink positioning message, if the receiving address of the receiving terminal is a unicast address, the sending terminal selects another unused serial number from the resource pool and adds the another unused serial number to the another sidelink positioning message.

The serial number in the resource pool may be, for example, a number having multiple digits, etc., which may be set according to actual needs, and is not specifically limited here.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, between broadcast and unicast, between unicast and groupcast are different.

With the method for sending a sidelink positioning message provided in this embodiment of the present disclosure, the sending terminal may send the sidelink positioning message carrying the serial number to the receiving terminal, so that when the receiving terminal receives sidelink positioning messages with the same serial number, the receiving terminal may discard the currently received sidelink positioning message, thereby realizing duplicate detection and avoiding repeated reception of the sidelink positioning message.

With reference to FIG. 4, FIG. 4 is a flowchart of a method for sending a sidelink positioning message according to an embodiment of the present disclosure. The method is performed by a sending terminal. As shown in FIG. 4, the method in this embodiment may include, but is not limited to, the following steps.

At step S401, a sidelink positioning message carrying a serial number is sent to a receiving terminal. In a current positioning session, different sidelink positioning messages carry different serial numbers.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in the current positioning session, different sidelink positioning messages carry different serial numbers, that is, the serial number in the currently sent sidelink positioning message is different from the serial numbers carried in other sidelink positioning messages other than the sidelink positioning message in the current positioning session. In the current positioning session, each terminal involved may count the serial numbers carried in the messages that have been exchanged in the positioning session and store them, so that when sending a sidelink positioning message, one of the serial numbers that has not been stored is selected from a resource pool of serial numbers and added to the sidelink positioning message.

In the current positioning session, each terminal involved may count and store serial numbers in the sent sidelink positioning messages and serial numbers in the received sidelink positioning messages. As for sidelink positioning messages sent by other terminals to other terminals in the current positioning session, the messages may be parsed to obtain the serial numbers therein and store the serial numbers.

In the embodiments of the present disclosure, in an example, the process of the sending terminal executing the step S401 may include, for example, in response to the receiving address of the receiving terminal being a unicast address, a groupcast address, or a broadcast address, sending the sidelink positioning message carrying the serial number to the receiving terminal. That is, in the case that the receiving address in the sidelink positioning message to be sent is a unicast address, a groupcast address, or a broadcast address, the sending terminal may carry the serial number in the sidelink positioning message.

The sidelink positioning message may be an SLPP message or an RSPP message. For example, in the case that the receiving address in the SLPP/RSPP message to be sent is a unicast address, a groupcast address, or a broadcast address, the sending terminal may carry the serial number in the SLPP/RSPP message.

In this example, the sending terminal determines a sidelink positioning message to be sent, selects an unused serial number from a resource pool of serial numbers, and adds the unused serial number to the sidelink positioning message. When the sending terminal needs to send another sidelink positioning message, it selects another unused serial number from the resource pool, and adds the another unused serial number to the another sidelink positioning message.

In another example, the process of the sending terminal executing the step S401 may include, for example, in response to the receiving address of the receiving terminal being a unicast address, sending the sidelink positioning message carrying the serial number to the receiving terminal. That is, in the case that the receiving address of the receiving terminal is a unicast address, the sending terminal may carry the serial number in the sidelink positioning message; in the case that the receiving address of the receiving terminal is a groupcast address or a broadcast address, the sending terminal may not carry the serial number in the sidelink positioning message.

The sidelink positioning message may be an SLPP message or an RSPP message. For example, in the case that the receiving address in the SLPP/RSPP message to be sent is a unicast address, the sending terminal may carry the serial number in the SLPP/RSPP message; in the case that the receiving address in the SLPP/RSPP message to be sent is a groupcast address or a broadcast address, the sending terminal may not carry the serial number in the SLPP/RSPP message.

In this example, the sending terminal determines a sidelink positioning message to be sent. If the receiving address of the receiving terminal is a unicast address, the sending terminal selects an unused serial number from the resource pool of serial numbers and adds the unused serial number to the sidelink positioning message. When the sending terminal needs to send another sidelink positioning message, if the receiving address of the receiving terminal is a unicast address, the sending terminal selects another unused serial number from the resource pool and adds the another unused serial number to the another sidelink positioning message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

With the method for sending a sidelink positioning message provided in this embodiment of the present disclosure, the sending terminal may send the sidelink positioning message carrying the serial number to the receiving terminal, and in the current positioning session, different sidelink positioning messages carry different serial numbers, so that when the receiving terminal receives sidelink positioning messages with the same serial number from the same positioning session, the receiving terminal may discard the currently received sidelink positioning message, thereby realizing duplicate detection and avoiding repeated reception of the same sidelink positioning message in the same positioning session.

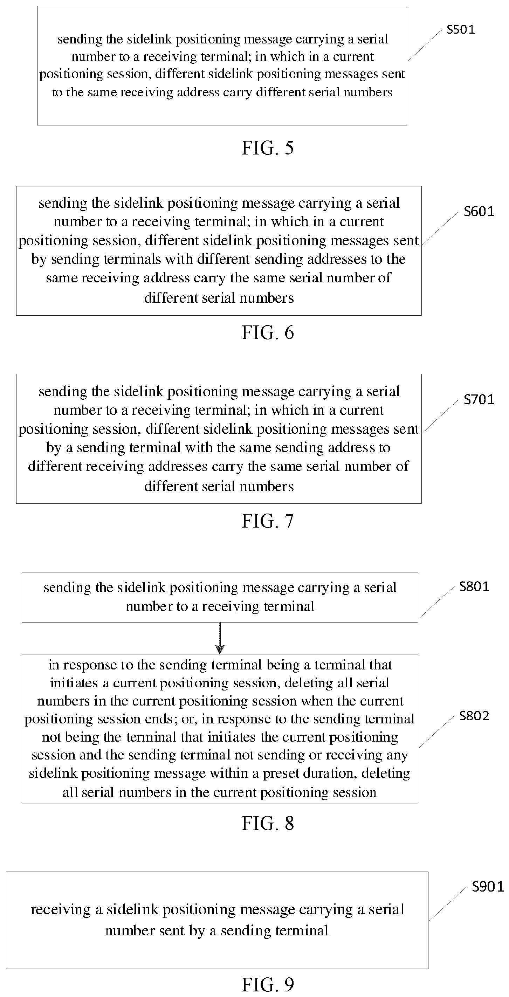

With reference to FIG. 5, FIG. 5 is a flowchart of a method for sending a sidelink positioning message according to an embodiment of the present disclosure. The method is performed by a sending terminal. As shown in FIG. 5, the method in this embodiment may include, but is not limited to, the following steps.

At step S501, a sidelink positioning message carrying a serial number is sent to a receiving terminal. In a current positioning session, different sidelink positioning messages sent to the same receiving address carry different serial numbers.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in an example, in the current positioning session, different sidelink positioning messages sent by sending terminals with different sending addresses to the same receiving address carry different serial numbers, that is, the serial number in the currently sent sidelink positioning message is different from the serial numbers carried in sidelink positioning messages sent by other sending terminals to the receiving terminal in the current positioning session. In the current positioning session, each terminal involved may count the serial numbers carried in the sidelink positioning messages that carry the receiving address of the same receiving terminal in the positioning session and store them, so that when another sidelink positioning message is sent to the receiving terminal, one of the serial numbers that has not been stored is selected from a resource pool of serial numbers and added to the sidelink positioning message.

In the embodiments of the present disclosure, in another example, in the current positioning session, different sidelink positioning messages sent by a sending terminal with the same sending address to the same receiving address carry different serial numbers. That is to say, the serial number in the currently sent sidelink positioning message is different from the serial numbers carried in other sidelink positioning messages except for the sidelink positioning message sent by the sending terminal to the receiving terminal in the current positioning session. In the current positioning session, each terminal involved may count the serial numbers in the sidelink positioning messages carrying the sending address of the terminal when it is used as the sending terminal and the receiving address of the same receiving terminal in the positioning session, and store them, so that when another sidelink positioning message is sent to the receiving terminal, one of the serial numbers that has not been stored is selected from a resource pool of serial numbers and added to the sidelink positioning message.

In the embodiments of the present disclosure, in an example, the process of the sending terminal executing the step S501 may include, for example, in response to the receiving address of the receiving terminal being a unicast address, a groupcast address, or a broadcast address, sending the sidelink positioning message carrying the serial number to the receiving terminal. That is, in the case that the receiving address in the sidelink positioning message to be sent is a unicast address, a groupcast address, or a broadcast address, the sending terminal may carry the serial number in the sidelink positioning message.

The sidelink positioning message may be an SLPP message or an RSPP message. For example, in the case that the receiving address in the SLPP/RSPP message to be sent is a unicast address, a groupcast address, or a broadcast address, the sending terminal may carry the serial number in the SLPP/RSPP message.

In another example, the process of the sending terminal executing the step S501 may include, for example, in response to the receiving address of the receiving terminal being a unicast address, sending the sidelink positioning message carrying the serial number to the receiving terminal. That is, in the case that the receiving address of the receiving terminal is a unicast address, the sending terminal may carry the serial number in the sidelink positioning message; in the case that the receiving address of the receiving terminal is a groupcast address or a broadcast address, the sending terminal may not carry the serial number in the sidelink positioning message.

The sidelink positioning message may be an SLPP message or an RSPP message. For example, in the case that the receiving address in the SLPP/RSPP message to be sent is a unicast address, the sending terminal may carry the serial number in the SLPP/RSPP message; in the case that the receiving address in the SLPP/RSPP message to be sent is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

With the method for sending a sidelink positioning message provided in this embodiment of the present disclosure, the sending terminal may send the sidelink positioning message carrying the serial number to the receiving terminal, and in the current positioning session, different sidelink positioning messages sent to the same receiving address carry different serial numbers, so that when the receiving terminal receives sidelink positioning messages with the same serial number from the same sending terminal in the same positioning session, the receiving terminal may discard the currently received sidelink positioning message, thereby realizing duplicate detection and avoiding repeated reception of the same sidelink positioning message from the same sending terminal in the same positioning session.

With reference to FIG. 6, FIG. 6 is a flowchart of a method for sending a sidelink positioning message according to an embodiment of the present disclosure. The method is performed by a sending terminal. As shown in FIG. 6, the method in this embodiment may include, but is not limited to, the following steps.

At step S601, a sidelink positioning message carrying a serial number is sent to a receiving terminal. In a current positioning session, different sidelink positioning messages sent by sending terminals with different sending addresses to the same receiving address carry the same serial number of different serial numbers.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, the process of the sending terminal executing the step S601 may include, for example, in response to the receiving address of the receiving terminal being a unicast address, sending the sidelink positioning message carrying the serial number to the receiving terminal. That is, in the case that the receiving address of the receiving terminal is a unicast address, the sending terminal may carry the serial number in the sidelink positioning message; in the case that the receiving address of the receiving terminal is a groupcast address or a broadcast address, the sending terminal may not carry the serial number in the sidelink positioning message.

The sidelink positioning message may be an SLPP message or an RSPP message. For example, in the case that the receiving address in the SLPP/RSPP message to be sent is a unicast address, the sending terminal may carry the serial number in the SLPP/RSPP message; in the case that the receiving address in the SLPP/RSPP message to be sent is a groupcast address or a broadcast address, the sending terminal may not carry the serial number in the SLPP/RSPP message.

In the embodiments of the present disclosure, in the current positioning session, different sidelink positioning messages sent by sending terminals with different sending addresses to the same receiving address may carry the same or different serial numbers. That is, in an example, the serial number in the currently sent sidelink positioning message may be the same as a serial number carried in a sidelink positioning message sent by another sending terminal other than the sending terminal to the receiving terminal in the current positioning session.

In the current positioning session, when the sending terminal sends a sidelink positioning message to the receiving terminal, it may ignore serial numbers carried in sidelink positioning messages sent by other sending terminals to the receiving terminal, and directly select a serial number from a resource pool of serial numbers and add the selected serial number to the sidelink positioning message to be sent.

In another example, the serial number in the currently sent sidelink positioning message may be different from serial numbers carried in sidelink positioning messages sent to the receiving terminal by other sending terminals other than the sending terminal in the current positioning session.

In the current positioning session, the sending terminal may interact with the receiving terminal, obtain serial numbers carried in all sidelink positioning messages received by it in a unicast mode and store the serial numbers; or the sending terminal may parse sidelink positioning message sent to the receiving terminal by other sending terminals in a unicast mode, obtain serial numbers therein and store the serial numbers. Therefore, when a sidelink positioning message is sent to the receiving terminal, one of the serial numbers that has not been stored is selected from a resource pool of serial numbers and added to the sidelink positioning message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

With the method for sending a sidelink positioning message provided in this embodiment of the present disclosure, the sending terminal may send the sidelink positioning message carrying the serial number to the receiving terminal, and in the current positioning session, different sidelink positioning messages sent by the sending terminals with different sending addresses to the same receiving address carry the same or different serial numbers, so that when the receiving terminal receives sidelink positioning messages with the same serial number from different sending terminals in the same positioning session, the receiving terminal may not discard the currently received sidelink positioning message, and when the receiving terminal receives sidelink positioning messages with the same serial number from the same sending terminal in the same positioning session, the receiving terminal may discard the currently received sidelink positioning message, thereby realizing duplicate detection.

With reference to FIG. 7, FIG. 7 is a flowchart of a method for sending a sidelink positioning message according to an embodiment of the present disclosure. The method is performed by a sending terminal. As shown in FIG. 7, the method in this embodiment may include, but is not limited to, the following steps.

At step S701, a sidelink positioning message carrying a serial number is sent to a receiving terminal. In a current positioning session, different sidelink positioning messages sent by a sending terminal with the same sending address to different receiving addresses carry the same serial number of different serial numbers.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in the current positioning session, different sidelink positioning messages sent by the sending terminal with the same sending address to different receiving addresses may carry the same or different serial numbers. That is, in an example, the serial number in the currently sent sidelink positioning message may be the same as a serial number carried in a sidelink positioning message sent by the sending terminal to another receiving terminal other than the receiving terminal in the current positioning session.

In the current positioning session, when the sending terminal sends a sidelink positioning message to the receiving terminal, it may ignore serial numbers carried in sidelink positioning messages sent by the sending terminal to other receiving terminals, and directly select a serial number from a resource pool of serial numbers and add the selected serial number to the sidelink positioning message to be sent.

In another example, the serial number in the currently sent sidelink positioning message may be different from serial numbers carried in sidelink positioning messages sent by the sending terminal to other receiving terminals other than the receiving terminal in the current positioning session.

In the current positioning session, the sending terminal may count serial numbers carried in sidelink positioning messages that carry the sending address of the sending terminal and other receiving addresses other than the receiving address of the receiving terminal and store the serial numbers. Therefore, when a sidelink positioning message is sent to the receiving terminal, one of the serial numbers that has not been stored is selected from a resource pool of serial numbers and added to the sidelink positioning message.

In the embodiments of the present disclosure, the process of the sending terminal executing the step S701 may include, for example, in response to the receiving address of the receiving terminal being a unicast address, a groupcast address, or a broadcast address, sending the sidelink positioning message carrying the serial number to the receiving terminal. That is, in the case that the receiving address in the sidelink positioning message to be sent is a unicast address, a groupcast address, or a broadcast address, the sending terminal may carry the serial number in the sidelink positioning message.

The sidelink positioning message may be an SLPP message or an RSPP message. For example, in the case that the receiving address in the SLPP/RSPP message to be sent is a unicast address, a groupcast address, or a broadcast address, the sending terminal may carry the serial number in the SLPP/RSPP message.

In another example, the process of the sending terminal executing the step S701 may include, for example, in response to the receiving address of the receiving terminal being a unicast address, sending the sidelink positioning message carrying the serial number to the receiving terminal. That is, in the case that the receiving address of the receiving terminal is a unicast address, the sending terminal may carry the serial number in the sidelink positioning message; in the case that the receiving address of the receiving terminal is a groupcast address or a broadcast address, the sending terminal may not carry the serial number in the sidelink positioning message.

The sidelink positioning message may be an SLPP message or an RSPP message. For example, in the case that the receiving address in the SLPP/RSPP message to be sent is a unicast address, the sending terminal may carry the serial number in the SLPP/RSPP message; in the case that the receiving address in the SLPP/RSPP message to be sent is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

With the method for sending a sidelink positioning message provided in this embodiment of the present disclosure, the sending terminal may send the sidelink positioning message carrying the serial number to the receiving terminal, and in the current positioning session, different sidelink positioning messages sent by the sending terminal with the same sending address to different receiving addresses carry the same or different serial numbers, so that when the receiving terminal receives sidelink positioning messages with the same serial number the same sending terminal in the same positioning session, the receiving terminal may discard the currently received sidelink positioning message, without considering the sidelink positioning messages with the same serial number received by other receiving terminals from the sending terminal, thereby realizing duplicate detection.

With reference to FIG. 8, FIG. 8 is a flowchart of a method for sending a sidelink positioning message according to an embodiment of the present disclosure. The method is performed by a sending terminal. As shown in FIG. 8, the method in this embodiment may include, but is not limited to, the following steps.

At step S801, a sidelink positioning message carrying a serial number is sent to a receiving terminal.

In the embodiments of the present disclosure, the sending terminal may refer to a terminal that sends the sidelink positioning message. The receiving terminal may refer to a terminal that receives the sidelink positioning message. If a terminal only sends messages during a sidelink positioning process, the terminal may be a sending terminal. If a terminal only receives messages during the sidelink positioning process, the terminal may be a receiving terminal. If a terminal both sends and receives messages during the sidelink positioning process, the terminal may be used as both a sending terminal and a receiving terminal. When the terminal is used as both a sending terminal and a receiving terminal, the message sent when it is used as the sending terminal is different from the message received when it is used as the receiving terminal.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address (also called multicast address), or a broadcast address. The unicast address, the groupcast address, and the broadcast address are represented by a destination layer 2 ID.

In the embodiments of the present disclosure, in an example, the process of the sending terminal executing the step S801 may include, for example, sending the sidelink positioning message carrying the serial number to the receiving terminal in response to the receiving address of the receiving terminal being a unicast address, a groupcast address, or a broadcast address. That is, in the case that the receiving address in the sidelink positioning message to be sent is a unicast address, a groupcast address, or a broadcast address, the sending terminal may carry the serial number in the sidelink positioning message.

The sidelink positioning message may be an SLPP message or an RSPP message. For example, in the case that the receiving address in the SLPP/RSPP message to be sent is a unicast address, a groupcast address, or a broadcast address, the sending terminal may carry the serial number in the SLPP/RSPP message.

In another example, the process of the sending terminal executing the step S801 may include, for example, in response to the receiving address of the receiving terminal being a unicast address, sending the sidelink positioning message carrying the serial number to the receiving terminal. That is, in the case that the receiving address of the receiving terminal is a unicast address, the sending terminal may carry the serial number in the sidelink positioning message; in the case that the receiving address of the receiving terminal is a groupcast address or a broadcast address, the sending terminal may not carry the serial number in the sidelink positioning message.

The sidelink positioning message may be an SLPP message or an RSPP message. For example, in the case that the receiving address in the SLPP/RSPP message to be sent is a unicast address, the sending terminal may carry the serial number in the SLPP/RSPP message; in the case that the receiving address in the SLPP/RSPP message to be sent is a groupcast address or a broadcast address, the sending terminal may not carry the serial number in the SLPP/RSPP message.

At step S802, in response to the sending terminal being a terminal that initiates a current positioning session, all serial numbers in the current positioning session are deleted when the current positioning session ends; or in response to the sending terminal not being the terminal that initiates the current positioning session and the sending terminal not sending or receiving any sidelink positioning message within a preset duration, all serial numbers in the current positioning session are deleted.

In the embodiments of the present disclosure, in an example, in response to the sending terminal being the terminal that initiates the current positioning session, when the current positioning session ends, all serial numbers in the current positioning session are deleted. In the case where the sending terminal is the terminal that initiates the current positioning session, the current positioning session may be ended by the sending terminal, and the sending terminal may know a time point when the current positioning session ends, and then delete all serial numbers in the current positioning session.

It should be noted that the sending terminal may delete each serial number counted or stored in the current positioning session, which may include at least one of the following: a serial number carried in the sent sidelink positioning message, a serial number carried in the received sidelink positioning message, and a serial number carried in a sidelink positioning message sent by another sending terminal to the receiving terminal.

In another example, in response to the sending terminal not being the terminal that initiates the current positioning session and the sending terminal not sending or receiving any sidelink positioning message within the preset duration, all serial numbers in the current positioning session are deleted. In the case where the sending terminal is not the terminal that initiates the current positioning session, it is difficult for the sending terminal to know the time point when the current positioning session ends, and therefore, all serial numbers in the current positioning session may be deleted in the case that no sidelink positioning message is sent or received within the preset duration.

The preset duration may be set by a protocol agreement, or configured by a network device, or configured by pre-configuration information. For example, the preset duration may be 10 minutes.

With the method for sending a sidelink positioning message provided in this embodiment of the present disclosure, the sending terminal may send the sidelink positioning message carrying the serial number to the receiving terminal, and deletes all serial numbers in the current positioning session when the current positioning session ends in response to the sending terminal being the terminal that initiates the current positioning session or deletes all serial numbers in the current positioning session in response to the sending terminal not being the terminal that initiates the current positioning session and the sending terminal not sending or receiving any sidelink positioning message within he preset duration, so that when the receiving terminal receives sidelink positioning messages with the same serial number, the receiving terminal may discard the currently received sidelink positioning message, thereby realizing duplicate detection, avoiding repeated reception of the sidelink positioning message, and facilitating reuse of the serial numbers in subsequent positioning sessions.

With reference to FIG. 9, FIG. 9 is a flowchart of a method for receiving a sidelink positioning message according to an embodiment of the present disclosure. The method is performed by a receiving terminal. As shown in FIG. 9, the method in this embodiment may include, but is not limited to, the following steps.

At step S901, a sidelink positioning message carrying a serial number sent by a sending terminal is received.

In the embodiments of the present disclosure, the sending terminal may refer to a terminal that sends the sidelink positioning message. The receiving terminal may refer to a terminal that receives the sidelink positioning message. If a terminal only sends messages during a sidelink positioning process, the terminal may be a sending terminal. If a terminal only receives messages during the sidelink positioning process, the terminal may be a receiving terminal. If a terminal both sends and receives messages during the sidelink positioning process, the terminal may be used as both a sending terminal and a receiving terminal. When the terminal is used as both a sending terminal and a receiving terminal, the message sent when it is used as the sending terminal is different from the message received when it is used as the receiving terminal.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address (also called multicast address), or a broadcast address. The unicast address, the groupcast address, and the broadcast address are represented by a destination layer 2 ID.

In the embodiments of the present disclosure, in an example, the process of the receiving terminal executing the step S901 may include, for example, receiving the sidelink positioning message carrying the serial number and a receiving address of the receiving terminal sent by the sending terminal. The receiving address is any one of: a unicast address, a groupcast address, or a broadcast address. Correspondingly, the sending terminal may carry the serial number in the sidelink positioning message to be sent when the receiving address is a unicast address, a groupcast address, or a broadcast address.

The sidelink positioning message may be a message using a sidelink positioning protocol/ranging and sidelink positioning protocol (SLPP/RSPP), for example, an SLPP message or an RSPP message. For example, in the case that the receiving address is a unicast address, a groupcast address, or a broadcast address, the sending terminal may carry the serial number in the SLPP/RSPP message.

In another example, the process of the receiving terminal executing the step S901 may include, for example, receiving the sidelink positioning message carrying the serial number and a receiving address of the receiving terminal sent by the sending terminal. The receiving address is a unicast address. Correspondingly, the sending terminal may carry the serial number in the sidelink positioning message to be sent when the receiving address is a unicast address, and may not carry the serial number in the sidelink positioning message to be sent when the receiving address is a groupcast address or a broadcast address.

The sidelink positioning message may be, for example, an SLPP message or an RSPP message. For example, in the case that the receiving address is a unicast address, the sending terminal may carry the serial number in the SLPP/RSPP message; in the case that the receiving address is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, between broadcast and unicast, between unicast and groupcast are different.

With the method for receiving a sidelink positioning message provided in this embodiment of the present disclosure, the receiving terminal may receive the sidelink positioning message carrying the serial number sent by the sending terminal, so that when the receiving terminal receives sidelink positioning messages with the same serial number, the receiving terminal may discard the currently received sidelink positioning message, thereby realizing duplicate detection and avoiding repeated reception of the sidelink positioning message.

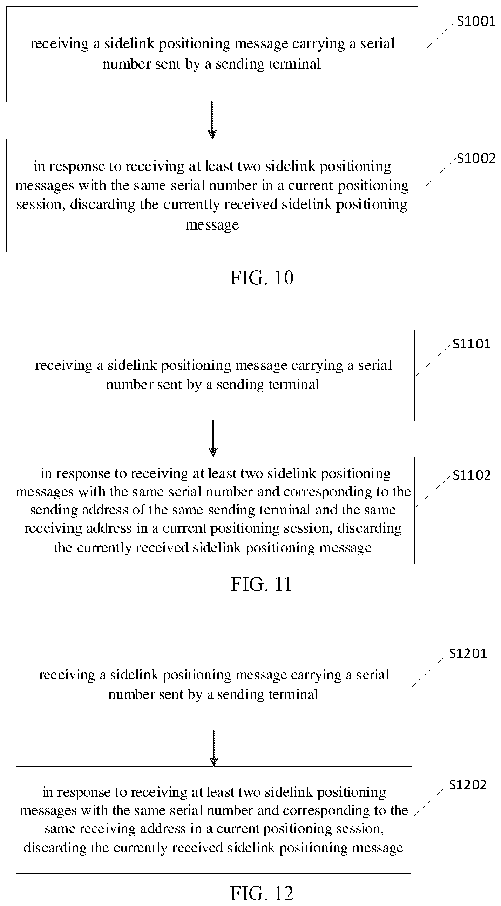

With reference to FIG. 10, FIG. 10 is a flowchart of a method for receiving a sidelink positioning message according to an embodiment of the present disclosure. The method is performed by a receiving terminal. As shown in FIG. 10, the method in this embodiment may include, but is not limited to, the following steps.

At step S1001, a sidelink positioning message carrying a serial number sent by a sending terminal is received.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in an example, the process of the receiving terminal executing the step S1001 may include, for example, receiving the sidelink positioning message carrying the serial number and a receiving address of the receiving terminal sent by the sending terminal. The receiving address is any one of: a unicast address, a groupcast address, or a broadcast address. Correspondingly, the sending terminal may carry the serial number in the sidelink positioning message to be sent when the receiving address is a unicast address, a groupcast address, or a broadcast address.

The sidelink positioning message may be, for example, an SLPP message or an RSPP message. For example, in the case that the receiving address is a unicast address, a groupcast address, or a broadcast address, the sending terminal may carry the serial number in the SLPP/RSPP message.

In another example, the process of the receiving terminal executing the step S1001 may include, for example, receiving the sidelink positioning message carrying the serial number and a receiving address of the receiving terminal sent by the sending terminal. The receiving address is a unicast address. Correspondingly, the sending terminal may carry the serial number in the sidelink positioning message to be sent when the receiving address is a unicast address, and may not carry the serial number in the sidelink positioning message to be sent when the receiving address is a groupcast address or a broadcast address.

The sidelink positioning message may be, for example, an SLPP message or an RSPP message. For example, in the case that the receiving address is a unicast address, the sending terminal may carry the serial number in the SLPP/RSPP message; in the case that the receiving address is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, between broadcast and unicast, between unicast and groupcast are different.

At step S 1002, in response to receiving at least two sidelink positioning messages with the same serial number in a current positioning session, the currently received sidelink positioning message is discarded.

In the embodiments of the present disclosure, in the current positioning session, each terminal involved may count serial numbers carried in sidelink positioning messages that have been exchanged in the positioning session and store them. For example, the receiving terminal may store the serial numbers carried in the sidelink positioning messages that have been exchanged in the positioning session, so that when receiving a sidelink positioning message, the receiving terminal determines whether a serial number carried in the sidelink positioning message is repeated with a stored serial number, and if so, the currently received sidelink positioning message is discarded.

Correspondingly, the sending terminal may also store the serial numbers carried in the sidelink positioning messages that have been exchanged in the positioning session, and then when sending a sidelink positioning message, the sending terminal may select one of the serial numbers that has not been stored from a resource pool of serial numbers and add the selected serial number to the sidelink positioning message.

In the embodiments of the present disclosure, the receiving terminal may perform judgment of step S1002 each time it receives a sidelink positioning message. That is, if there are at least two sidelink positioning messages with the same serial number in the current positioning session, including the currently received sidelink positioning message, it means that the serial number in the currently received sidelink positioning message is the same as the serial number in the previously received sidelink positioning message, in this case, the currently received sidelink positioning message needs to be discarded.

With the method for receiving a sidelink positioning message provided in this embodiment of the present disclosure, the receiving terminal may receive the sidelink positioning message carrying the serial number sent by the sending terminal, and discard the currently received sidelink positioning message in response to receiving at least two sidelink positioning messages with the same serial number in the current positioning session, thereby realizing duplicate detection and avoiding repeated reception of the sidelink positioning message.

With reference to FIG. 11, FIG. 11 is a flowchart of a method for receiving a sidelink positioning message according to an embodiment of the present disclosure. The method is performed by a receiving terminal. As shown in FIG. 11, the method in this embodiment may include, but is not limited to, the following steps.

At step S1101, a sidelink positioning message carrying a serial number sent by a sending terminal is received.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in an example, the process of the receiving terminal executing the step S1101 may include, for example, receiving the sidelink positioning message carrying the serial number and a receiving address of the receiving terminal sent by the sending terminal. The receiving address is any one of: a unicast address, a groupcast address, or a broadcast address. Correspondingly, the sending terminal may carry the serial number in the sidelink positioning message to be sent when the receiving address is a unicast address, a groupcast address, or a broadcast address.

The sidelink positioning message may be, for example, an SLPP message or an RSPP message. For example, in the case that the receiving address is a unicast address, a groupcast address, or a broadcast address, the sending terminal may carry the serial number in the SLPP/RSPP message.

In another example, the process of the receiving terminal executing the step S1101 may include, for example, receiving the sidelink positioning message carrying the serial number and a receiving address of the receiving terminal sent by the sending terminal. The receiving address is a unicast address. Correspondingly, the sending terminal may carry the serial number in the sidelink positioning message to be sent when the receiving address is a unicast address, and may not carry the serial number in the sidelink positioning message to be sent when the receiving address is a groupcast address or a broadcast address.

The sidelink positioning message may be, for example, an SLPP message or an RSPP message. For example, in the case that the receiving address is a unicast address, the sending terminal may carry the serial number in the SLPP/RSPP message; in the case that the receiving address is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

At step S1102, in response to receiving at least two sidelink positioning messages with the same serial number and corresponding to the sending address of the same sending terminal and the same receiving address in a current positioning session, the currently received sidelink positioning message is discarded.

In the embodiments of the present disclosure, in the current positioning session, each terminal involved may count serial numbers carried in sidelink positioning messages received from the same sending terminal by the terminal when it used as the receiving terminal in the positioning session and store them. For example, the receiving terminal may count and store serial numbers carried in sidelink positioning messages carrying the sending address of the same sending terminal, so that when receiving a sidelink positioning message, the receiving terminal determines whether a serial number carried in the sidelink positioning message is repeated with a stored serial number, and if so, the currently received sidelink positioning message is discarded.

Correspondingly, the sending terminal may also store serial numbers carried in sidelink positioning messages sent to the receiving terminal in the positioning session, and then when sending a sidelink positioning message, the sending terminal may select one of the serial numbers that has not been stored from a resource pool of serial numbers and add the selected serial number to the sidelink positioning message.

In the embodiments of the present disclosure, the receiving terminal may perform judgment of step S1102 each time it receives a sidelink positioning message. That is, if there are at least two sidelink positioning messages with the same serial number and corresponding to the sending address of the same sending terminal and the same receiving address in the current positioning session, including the currently received sidelink positioning message, it means that the serial number in the currently received sidelink positioning message is the same as the serial number in the previously received sidelink positioning message corresponding to the same sending address and the same receiving address, in this case, the currently received sidelink positioning message needs to be discarded.

With the method for receiving a sidelink positioning message provided in this embodiment of the present disclosure, the receiving terminal may receive the sidelink positioning message carrying the serial number sent by the sending terminal, and discard the currently received sidelink positioning message in response to receiving at least two sidelink positioning messages with the same serial number corresponding to the sending address of the same sending terminal and the same receiving address in the current positioning session, thereby realizing duplicate detection and avoiding repeated reception of the sidelink positioning message.

With reference to FIG. 12, FIG. 12 is a flowchart of a method for receiving a sidelink positioning message according to an embodiment of the present disclosure. The method is performed by a receiving terminal. As shown in FIG. 12, the method in this embodiment may include, but is not limited to, the following steps.

At step S1201, a sidelink positioning message carrying a serial number sent by a sending terminal is received.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in an example, the process of the receiving terminal executing the step S1201 may include, for example, receiving the sidelink positioning message carrying the serial number and a receiving address of the receiving terminal sent by the sending terminal. The receiving address is any one of: a unicast address, a groupcast address, or a broadcast address. Correspondingly, the sending terminal may carry the serial number in the sidelink positioning message to be sent when the receiving address is a unicast address, a groupcast address, or a broadcast address.

The sidelink positioning message may be, for example, an SLPP message or an RSPP message. For example, in the case that the receiving address is a unicast address, a groupcast address, or a broadcast address, the sending terminal may carry the serial number in the SLPP/RSPP message.

In another example, the process of the receiving terminal executing the step S 1201 may include, for example, receiving the sidelink positioning message carrying the serial number and a receiving address of the receiving terminal sent by the sending terminal. The receiving address is a unicast address. Correspondingly, the sending terminal may carry the serial number in the sidelink positioning message to be sent when the receiving address is a unicast address, and may not carry the serial number in the sidelink positioning message to be sent when the receiving address is a groupcast address or a broadcast address.

The sidelink positioning message may be, for example, an SLPP message or an RSPP message. For example, in the case that the receiving address is a unicast address, the sending terminal may carry the serial number in the SLPP/RSPP message; in the case that the receiving address is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

At step S1202, in response to receiving at least two sidelink positioning messages with the same serial number and corresponding to the same receiving address in a current positioning session, the currently received sidelink positioning message is discarded.

In the embodiments of the present disclosure, in the current positioning session, the receiving terminal may count and store serial numbers carried in sidelink positioning messages carrying sending addresses of respective sending terminals, so that when a serial number carried in the currently received sidelink positioning message is repeated with a stored serial number, the currently received sidelink positioning message is discarded.

Correspondingly, the sending terminal may also store serial numbers carried in sidelink positioning messages carrying the sending addresses of respective sending terminals and the receiving address of the receiving terminal in the positioning session, and then when sending a sidelink positioning message, the sending terminal may select one of the serial numbers that has not been stored from a resource pool of serial numbers and add the selected serial number to the sidelink positioning message.

In the embodiments of the present disclosure, the receiving terminal may perform judgment of step S1202 each time it receives a sidelink positioning message. That is, if there are at least two sidelink positioning messages with the same serial number and corresponding to the same receiving address in the current positioning session, including the currently received sidelink positioning message, it means that the serial number in the currently received sidelink positioning message is the same as the serial number in the previously received sidelink positioning message corresponding to the same receiving address, in this case, the currently received sidelink positioning message needs to be discarded.

With the method for receiving a sidelink positioning message provided in this embodiment of the present disclosure, the receiving terminal may receive the sidelink positioning message carrying the serial number sent by the sending terminal, and discard the currently received sidelink positioning message in response to receiving at least two sidelink positioning messages with the same serial number corresponding to the same receiving address in the current positioning session, thereby realizing duplicate detection and avoiding repeated reception of the sidelink positioning message.

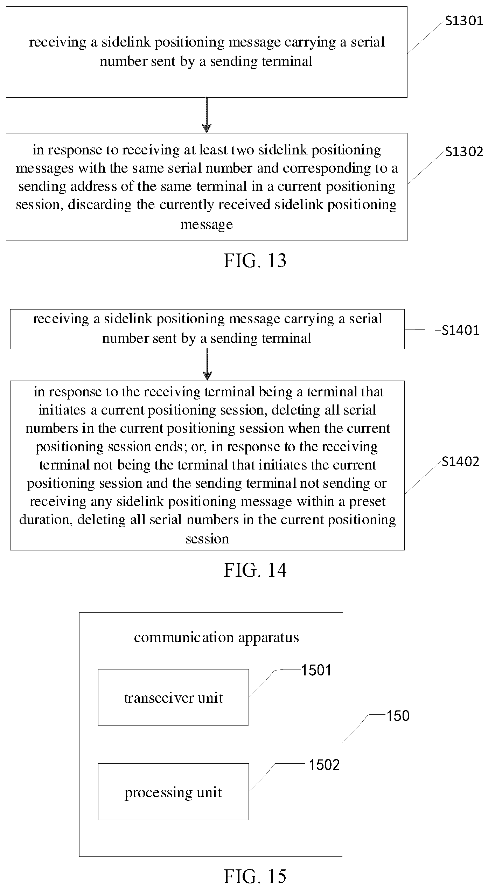

With reference to FIG. 13, FIG. 13 is a flowchart of a method for receiving a sidelink positioning message according to an embodiment of the present disclosure. The method is performed by a receiving terminal. As shown in FIG. 13, the method in this embodiment may include, but is not limited to, the following steps.

At step S1301, a sidelink positioning message carrying a serial number sent by a sending terminal is received.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in an example, the process of the receiving terminal executing the step S1301 may include, for example, receiving the sidelink positioning message carrying the serial number and a receiving address of the receiving terminal sent by the sending terminal. The receiving address is any one of: a unicast address, a groupcast address, or a broadcast address. Correspondingly, the sending terminal may carry the serial number in the sidelink positioning message to be sent when the receiving address is a unicast address, a groupcast address, or a broadcast address.

The sidelink positioning message may be, for example, an SLPP message or an RSPP message. For example, in the case that the receiving address is a unicast address, a groupcast address, or a broadcast address, the sending terminal may carry the serial number in the SLPP/RSPP message.

In another example, the process of the receiving terminal executing the step S1301 may include, for example, receiving the sidelink positioning message carrying the serial number and a receiving address of the receiving terminal sent by the sending terminal. The receiving address is a unicast address. Correspondingly, the sending terminal may carry the serial number in the sidelink positioning message to be sent when the receiving address is a unicast address, and may not carry the serial number in the sidelink positioning message to be sent when the receiving address is a groupcast address or a broadcast address.

The sidelink positioning message may be, for example, an SLPP message or an RSPP message. For example, in the case that the receiving address is a unicast address, the sending terminal may carry the serial number in the SLPP/RSPP message; in the case that the receiving address is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

At step S1302, in response to receiving at least two sidelink positioning messages with the same serial number and corresponding to a sending address of the same terminal in a current positioning session, the currently received sidelink positioning message is discarded.

In the embodiments of the present disclosure, in the current positioning session, the receiving terminal may count and store serial numbers carried in sidelink positioning messages carrying the sending address of the sending terminal and receiving addresses of respective receiving terminals, so that when a sidelink positioning message sent by the sending terminal is received and a serial number carried in the currently received sidelink positioning message is repeated with a stored serial number, the sidelink positioning message is discarded.

Correspondingly, the sending terminal may also store serial numbers carried in sidelink positioning messages carrying the receiving addresses of respective receiving terminals in the positioning session, and then when sending a sidelink positioning message, the sending terminal may select one of the serial numbers that has not been stored from a resource pool of serial numbers and add the selected serial number to the sidelink positioning message.

In the embodiments of the present disclosure, the receiving terminal may perform judgment of step S1302 each time it receives a sidelink positioning message. That is, if there are at least two sidelink positioning messages with the same serial number and corresponding to the sending address of the same sending terminal in the current positioning session, including the currently received sidelink positioning message, it means that the serial number in the currently received sidelink positioning message is the same as the serial number in the previously received sidelink positioning message corresponding to the same sending address, in this case, the currently received sidelink positioning message needs to be discarded.

With the method for receiving a sidelink positioning message provided in this embodiment of the present disclosure, the receiving terminal may receive the sidelink positioning message carrying the serial number sent by the sending terminal, and discard the currently received sidelink positioning message in response to receiving at least two sidelink positioning messages with the same serial number corresponding to the sending address of the same sending terminal in the current positioning session, thereby realizing duplicate detection and avoiding repeated reception of the sidelink positioning message.

With reference to FIG. 14, FIG. 14 is a flowchart of a method for receiving a sidelink positioning message according to an embodiment of the present disclosure. The method is performed by a receiving terminal. As shown in FIG. 14, the method in this embodiment may include, but is not limited to, the following steps.

At step S1401, a sidelink positioning message carrying a serial number sent by a sending terminal is received.

In the embodiments of the present disclosure, the sidelink positioning message refers to a message exchanged between at least two terminals involved in a terminal positioning process. In an example, a receiving address of the receiving terminal in the sidelink positioning message may be a device ID of the receiving terminal. In another example, the receiving address of the receiving terminal in the sidelink positioning message may be any of: a unicast address, a groupcast address, or a broadcast address. The unicast address, the groupcast address, and the broadcast address are represented by a destination layer 2 ID.

In the embodiments of the present disclosure, a positioning session refers to an interaction process among multiple terminals involved in a terminal positioning process. A positioning session is, for example, an SLPP/RSPP session.

In the embodiments of the present disclosure, in an example, the process of the receiving terminal executing the step S1401 may include, for example, receiving the sidelink positioning message carrying the serial number and a receiving address of the receiving terminal sent by the sending terminal. The receiving address is any one of: a unicast address, a groupcast address, or a broadcast address. Correspondingly, the sending terminal may carry the serial number in the sidelink positioning message to be sent when the receiving address is a unicast address, a groupcast address, or a broadcast address.

The sidelink positioning message may be, for example, an SLPP message or an RSPP message. For example, in the case that the receiving address is a unicast address, a groupcast address, or a broadcast address, the sending terminal may carry the serial number in the SLPP/RSPP message.

In another example, the process of the receiving terminal executing the step S1401 may include, for example, receiving the sidelink positioning message carrying the serial number and a receiving address of the receiving terminal sent by the sending terminal. The receiving address is a unicast address. Correspondingly, the sending terminal may carry the serial number in the sidelink positioning message to be sent when the receiving address is a unicast address, and may not carry the serial number in the sidelink positioning message to be sent when the receiving address is a groupcast address or a broadcast address.

The sidelink positioning message may be, for example, an SLPP message or an RSPP message. For example, in the case that the receiving address is a unicast address, the sending terminal may carry the serial number in the SLPP/RSPP message; in the case that the receiving address is a groupcast address or a broadcast address, the sending terminal may not carry the serial number in the SLPP/RSPP message.

In the embodiments of the present disclosure, for multiple terminals involved in the terminal positioning process, in an example, a dedicated resource pool of serial numbers may be set for each terminal. In another example, multiple terminals may share a resource pool of serial numbers. In another example, among multiple terminals, some terminals may be provided with respective dedicated resource pools of serial numbers, and some terminals may share a resource pool of serial numbers.

For a terminal, in the case of setting a dedicated resource pool of serial numbers for the terminal, in an example, one resource pool may be set, which is used for unicast, groupcast and broadcast of the terminal. In another example, three resource pools may be set, which are used for unicast, groupcast and broadcast of the terminal, respectively. In the case that multiple terminals share a resource pool of serial numbers, in an example, there may be one resource pool, which is used for unicast, groupcast and broadcast; in another example, there may be multiple resource pools, which are used for unicast, groupcast and broadcast, respectively.

It should be noted that the unicast, groupcast and broadcast of the terminal may be respectively allocated with resource pools of serial numbers, and the serial numbers in different resource pools are different; or the unicast, groupcast and broadcast of the terminal may use the same resource pool, that is, a shared resource pool. Both of the above situations are acceptable, and it is only necessary to ensure that the serial numbers sent by the sending terminal to the same unicast address/groupcast address/broadcast address are different, and it is not necessary to ensure that the serial numbers between groupcast and broadcast, the serial numbers between broadcast and unicast, the serial numbers between unicast and groupcast are different.

At step S 1402, in response to the receiving terminal being a terminal that initiates a current positioning session, all serial numbers in the current positioning session are deleted when the current positioning session ends; or, in response to the receiving terminal not being the terminal that initiates the current positioning session and the sending terminal not sending or receiving any sidelink positioning message within a preset duration, all serial numbers in the current positioning session are deleted.

In the embodiments of the present disclosure, in an example, in response to the receiving terminal being the terminal that initiates the current positioning session, when the current positioning session ends, all serial numbers in the current positioning session are deleted. In the case where the receiving terminal is the terminal that initiates the current positioning session, the current positioning session may be ended by the receiving terminal, and the receiving terminal may know a time point when the current positioning session ends, and then delete all serial numbers in the current positioning session.

It should be noted that the receiving terminal may delete each serial number counted or stored in the current positioning session, which may include at least one of the following: a serial number carried in the sent sidelink positioning message, a serial number carried in the received sidelink positioning message, and a serial number carried in a sidelink positioning message sent by another sending terminal to the receiving terminal.

In another example, in response to the receiving terminal not being the terminal that initiates the current positioning session and the sending terminal not sending or receiving any sidelink positioning message within the preset duration, all serial numbers in the current positioning session are deleted. In the case where the receiving terminal is not the terminal that initiates the current positioning session, it is difficult for the receiving terminal to know the time point when the current positioning session ends, and therefore, all serial numbers in the current positioning session may be deleted in the case that no sidelink positioning message is sent or received within the preset duration.

The preset duration may be set by a protocol agreement, or configured by a network device, or configured by pre-configuration information. For example, the preset duration may be 10 minutes.

With the method for receiving a sidelink positioning message provided in this embodiment of the present disclosure, the receiving terminal may receive the sidelink positioning message carrying the serial number sent by the sending terminal, and deletes all serial numbers in the current positioning session when the current positioning session ends in response to the receiving terminal being the terminal that initiates the current positioning session or deletes all serial numbers in the current positioning session in response to the receiving terminal not being the terminal that initiates the current positioning session and the sending terminal not sending or receiving any sidelink positioning message within he preset duration, so that duplicate detection may be performed on the serial number carried in the received sidelink positioning message, and the currently received sidelink positioning message may be discarded in the case of repeated reception, and the serial number may be reused in subsequent positioning sessions.

The following is a specific example introduction to the method for sending/ receiving a sidelink positioning message according to the present disclosure.

Solution: the UE (when serving as the aforementioned sending terminal) includes a serial number in the sent SLPP/RSPP message.

Embodiment: SLPP/RSPP messages sent in a unicast, groupcast or broadcast mode may include a serial number.

Sub-solution 1: the UE (when serving as the aforementioned sending terminal) ensures that serial numbers in different messages in one SLPP/RSPP session are different.

Sub-solution 1.1: within the same SLPP/RSPP session, the UE ensures that serial numbers in different messages sent to the same address (unicast/multicast/broadcast)/UE are different.

Sub-solution 1.2: within the same SLPP/RSPP session, there is no need to ensure that serial numbers in messages sent by different UEs to the same unicast address/UE are different.

Sub-solution 1.3: for the same SLPP/RSPP session, there is no need to ensure that serial numbers in different messages sent by the UE to different addresses (unicast/multicast/broadcast)/UEs are different.

Embodiment: the above address may be a destination layer 2 ID.

Embodiment: serial numbers of groupcast, broadcast, and unicast may be allocated separately, and the same resource pool of serial numbers may be used. It is only necessary to ensure that serial numbers sent to the same groupcast/broadcast/unicast address are different, and there is no need to ensure that serial numbers between groupcast and broadcast, serial numbers between groupcast and unicast, and serial numbers between broadcast and unicast are different.

Sub-solution 2: if the SLPP/RSPP message is sent by multicast or broadcast, the serial number may not be included.

Sub-solution 3: if the UE (when serving as the aforementioned receiving terminal) receives an SLPP/RSPP message with the same serial number belonging to the same session, the message is discarded.

Sub-solution 3.1: if the UE receives an SLPP/RSPP message with the same serial number, corresponding to the same receiving address and belonging to the same session, it discards the message.

Sub-solution 3.2: if the UE receives an SLPP/RSPP message with the same serial number, corresponding to the same (sending address, receiving address) pair and belonging to the same session, it discards the message.

Sub-solution 3.3: if the UE receives an SLPP/RSPP message with the same serial number, corresponding to the same sending address and belonging to the same session, it discards the message.

Sub-solution 4: when the SLPP/RSPP session ends, the UE initiating the session deletes all sending and receiving serial numbers of the session.

Sub-solution 5: if the UE is not the initiator of the SLPP/RSPP session, and the UE has no activity in the session for a time period, all the sending and receiving serial numbers of the session are deleted.

Embodiment: the time period is agreed upon by a protocol, or configured by a network or pre-configuration information, such as 10 minutes.

In the embodiments provided by the present disclosure, the methods provided by the embodiments of the present disclosure are introduced from the perspectives of the sending terminal and the receiving terminal. In order to implement the functions in the methods provided by the embodiments of the present disclosure, the sending terminal and the receiving terminal may include a hardware structure and a software module, and the functions are implemented in the form of the hardware structure, the software module, or the hardware structure plus the software module. A function of the functions may be executed in the form of the hardware structure, the software module, or the hardware structure plus the software module.

FIG. 15 is a block diagram of a communication apparatus 150 provided in an embodiment of the present disclosure. The communication apparatus 150 shown in FIG. 15 may include a transceiver unit 1501 and a processing unit 1502. The transceiver unit 1501 may include a sending unit and/or a receiving unit, in which the sending unit is used to implement a sending function, the receiving unit is used to implement a receiving function, and the transceiver unit 1501 may implement the sending function and/or the receiving function.

The communication apparatus 150 may be a terminal (such as the sending terminal or the receiving terminal in the above method embodiments), an apparatus in the terminal, or an apparatus capable of being used in combination with the terminal.

The communication apparatus 150 is a terminal (such as the sending terminal in the above method embodiments).

The transceiver unit 1501 is configured to send the sidelink positioning message carrying a serial number to a receiving terminal.

Optionally, the transceiver unit 1501 is configured to send the sidelink positioning message carrying the serial number to the receiving terminal in response to a receiving address of the receiving terminal being a unicast address, a groupcast address or a broadcast address.

Optionally, the transceiver unit 1501 is configured to send the sidelink positioning message carrying the serial number to the receiving terminal in response to a receiving address of the receiving terminal being a unicast address.

Optionally, in a current positioning session, different sidelink positioning messages carry different serial numbers.

Optionally, in a current positioning session, different sidelink positioning messages sent to the same receiving address carry different serial numbers.

Optionally, in a current positioning session, different sidelink positioning messages sent by sending terminals having different sending addresses to the same receiving address carry the same serial number or different serial numbers.

Optionally, in a current positioning session, different sidelink positioning messages sent by a sending terminal with the same sending address to different receiving addresses carry the same serial number or different serial numbers.

Optionally, the processing unit 1502 is configured to delete all serial numbers in a current positioning session when the current positioning session ends, in response to the sending terminal being a terminal that initiates the current positioning session; or delete all serial numbers in a current positioning session, in response to the sending terminal not being a terminal that initiates the current positioning session and the sending terminal not sending or receiving any sidelink positioning message within a preset duration.

Optionally, the receiving address is a device identification of the receiving terminal; or the receiving address is any one of: a unicast address, a groupcast address, or a broadcast address.

Optionally, the unicast address, the groupcast address, and the broadcast address are represented by a destination layer 2 ID.

The communication apparatus 150 is a terminal (such as the receiving terminal in the above method embodiments).

The transceiver unit 1501 is configured to receive the sidelink positioning message carrying a serial number sent by a sending terminal.

Optionally, the transceiver unit 1501 is configured to receive the sidelink positioning message carrying the serial number and a receiving address of the receiving terminal sent by the sending terminal. The receiving address is any one of: a unicast address, a groupcast address, or a broadcast address.

Optionally, the transceiver unit 1501 is configured to receive the sidelink positioning message carrying the serial number and a receiving address of the receiving terminal sent by the sending terminal. The receiving address is a unicast address.

Optionally, the processing unit 1502 is configured to discard the sidelink positioning message currently received, in response to receiving at least two sidelink positioning messages having the same serial number in a current positioning session.

Optionally, the processing unit 1502 is configured to discard the sidelink positioning message currently received, in response to receiving at least two sidelink positioning messages having the same serial number and corresponding to a sending address of the same sending terminal and the same receiving address in a current positioning session.

Optionally, the processing unit 1502 is configured to discard the sidelink positioning message currently received, in response to receiving at least two sidelink positioning messages having the same serial number and corresponding to the same receiving address in a current positioning session.

Optionally, the processing unit 1502 is configured to discard the sidelink positioning message currently received, in response to receiving at least two sidelink positioning messages having the same serial number and corresponding to a sending address of the same sending terminal in a current positioning session.

Optionally, the processing unit 1502 is configured to delete all serial numbers in a current positioning session when the current positioning session ends, in response to the receiving terminal being a terminal that initiates the current positioning session; or delete all serial numbers in a current positioning session, in response to the receiving terminal not being a terminal that initiates the current positioning session and the sending terminal not sending or receiving any sidelink positioning message within a preset duration.

Optionally, the receiving address is a device identification of the receiving terminal; or the receiving address is any one of: a unicast address, a groupcast address, or a broadcast address.

Optionally, the unicast address, the groupcast address, and the broadcast address are represented by a destination layer 2 ID.

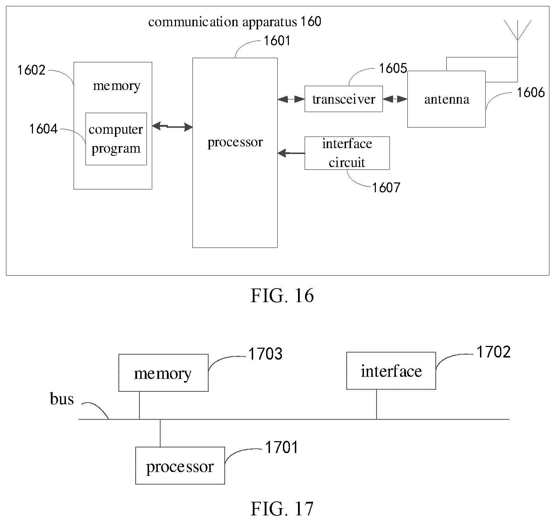

FIG. 16 is a block diagram of a communication apparatus 160 according to an embodiment of the present disclosure. The communication apparatus 160 may be a terminal (such as the sending terminal or the receiving terminal in the above method embodiments), a chip, a chip system, a processor, etc. that supports the terminal to implement the method. The apparatus may be used to implement the method in the above method embodiments. For details, please refer to the above method embodiments.

The communication apparatus 160 may include one or more processors 1601. The processor 1601 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 160 may also include one or more memories 1602 for storing the computer program 1604. The processor 1601 executes the computer program 1604, to cause the communication apparatus 160 to implement the method in the above method embodiments. Optionally, the memory 1602 may also store data. The communication apparatus 160 and the memory 1602 may be set up separately or integrated together.

Optionally, the communication apparatus 160 may also include a transceiver 1605 and an antenna 1606. The transceiver 1605 may be called a transceiver unit, a transceiver machine, or a transceiver circuit, etc., to implement the receiving and sending function. The transceiver 1605 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 160 may also include one or more interface circuits 1607. The interface circuit 1607 is used to receive code instructions and transmit the code instructions to the processor 1601. The processor 1601 runs the code instructions to cause the communication apparatus 160 to implement the method in the above method embodiments]

The communication apparatus 160 is a terminal (such as the sending terminal in the aforementioned method embodiments): the processor 1601 is configured to execute step S802 in FIG. 8. The transceiver 1605 is configured to execute step S301 in FIG. 3; step S401 in FIG. 4; step S501 in FIG. 5; step S601 in FIG. 6; step S701 in FIG. 7; step S801 in FIG. 8.

The communication apparatus 160 is a terminal (such as the receiving terminal in the aforementioned method embodiments): the transceiver 1605 is configured to execute step S901 in FIG. 9; step S1001 in FIG. 10; step S1101 in FIG. 11; step S1201 in FIG. 12; step S1301 in FIG. 13; step S1401 in FIG. 14. The processor 1601 is configured to execute step S1002 in FIG. 10; step S1102in FIG. 11; step S1202 in FIG. 12; step S1302 in FIG. 13; step S1402 in FIG. 14.

In an implementation, the processor 1601 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In an implementation, the processor 1601 may store a computer program 1603. When the computer program 1603 is running on the processor 1601, the communication apparatus 160 is caused to implement the method in the above method embodiments. The computer program 1603 may be solidified in the processor 1601, in which case the processor 1601 may be implemented in hardware.

In an implementation, the communication apparatus 160 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal (such as the first terminal in the aforementioned method embodiments), but the scope of the communication apparatus in the disclosure is not limited to this, and the structure of the communication apparatus may not be restricted by FIG. 16. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG. 17. The chip shown in FIG. 17 includes a processor 1701 and an interface 1702. There may be one or more processors 1701, and there may be one or more interfaces 1702.

For the situation that the chip is used to perform the functions of the terminal (such as the sending terminal in the above method embodiments) in the embodiments of the present disclosure: the interface 1702 is configured to send the sidelink positioning message carrying a serial number to a receiving terminal.

Optionally, the interface 1702 is configured to send the sidelink positioning message carrying the serial number to the receiving terminal in response to a receiving address of the receiving terminal being a unicast address, a groupcast address or a broadcast address.

Optionally, the interface 1702 is configured to send the sidelink positioning message carrying the serial number to the receiving terminal in response to a receiving address of the receiving terminal being a unicast address.

Optionally, in a current positioning session, different sidelink positioning messages carry different serial numbers.

Optionally, in a current positioning session, different sidelink positioning messages sent to the same receiving address carry different serial numbers.

Optionally, in a current positioning session, different sidelink positioning messages sent by sending terminals having different sending addresses to the same receiving address carry the same serial number or different serial numbers.

Optionally, in a current positioning session, different sidelink positioning messages sent by a sending terminal with the same sending address to different receiving addresses carry the same serial number or different serial numbers.

Optionally, the receiving address is a device identification of the receiving terminal; or the receiving address is any one of: a unicast address, a groupcast address, or a broadcast address.

Optionally, the unicast address, the groupcast address, and the broadcast address are represented by a destination layer 2 ID.

For the situation that the chip is used to perform the functions of the terminal (such as the receiving terminal in the above method embodiments) in the embodiments of the present disclosure: the interface 1702 is configured to receive the sidelink positioning message carrying a serial number sent by a sending terminal.

Optionally, the interface 1702 is configured to receive the sidelink positioning message carrying the serial number and a receiving address of the receiving terminal sent by the sending terminal. The receiving address is any one of: a unicast address, a groupcast address, or a broadcast address.

Optionally, the interface 1702 is configured to receive the sidelink positioning message carrying the serial number and a receiving address of the receiving terminal sent by the sending terminal. The receiving address is a unicast address.

Optionally, the receiving address is a device identification of the receiving terminal; or the receiving address is any one of: a unicast address, a groupcast address, or a broadcast address.

Optionally, the unicast address, the groupcast address, and the broadcast address are represented by a destination layer 2 ID.

Optionally, the chip also includes a memory 1303, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a communication system is provided. The communication system includes the communication apparatus as a terminal (such as the sending terminal in the above method embodiments) and the communication apparatus as a terminal (such as the receiving terminal in the above method embodiments) in the foregoing embodiment of FIG. 15, or the communication system includes the communication apparatus as a terminal (such as the sending terminal in the above method embodiments) and the communication apparatus as a terminal (such as the receiving terminal in the above method embodiments) in the foregoing embodiment of FIG. 16.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with the examples described in the embodiments of the present disclosure, units and algorithm steps may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for sending a sidelink positioning message, performed by a sending terminal, comprising:
sending the sidelink positioning message carrying a serial number to a receiving terminal.

2. The method of claim 1, wherein sending the sidelink positioning message carrying the serial number to the receiving terminal comprises:
sending the sidelink positioning message carrying the serial number to the receiving terminal in response to a receiving address of the receiving terminal being a unicast address, a groupcast address or a broadcast address.

3. The method of claim 1, wherein sending the sidelink positioning message carrying the serial number to the receiving terminal comprises:
sending the sidelink positioning message carrying the serial number to the receiving terminal in response to a receiving address of the receiving terminal being a unicast address.

4. The method of claim 2 or 3, wherein in a current positioning session, different sidelink positioning messages carry different serial numbers.

5. The method of claim 2 or 3, wherein in a current positioning session, different sidelink positioning messages sent to the same receiving address carry different serial numbers.

6. The method of claim 3, wherein in a current positioning session, different sidelink positioning messages sent by sending terminals having different sending addresses to the same receiving address carry the same serial number or different serial numbers.

7. The method of claim 2 or 3, wherein in a current positioning session, different sidelink positioning messages sent by a sending terminal with the same sending address to different receiving addresses carry the same serial number or different serial numbers.

8. The method of claim 1, further comprising:
deleting all serial numbers in a current positioning session when the current positioning session ends, in response to the sending terminal being a terminal that initiates the current positioning session; or
deleting all serial numbers in a current positioning session, in response to the sending terminal not being a terminal that initiates the current positioning session and the sending terminal not sending or receiving any sidelink positioning message within a preset duration.

9. The method of claim 1, wherein the receiving address is a device identification of the receiving terminal; or
the receiving address is any one of: a unicast address, a groupcast address, or a broadcast address.

10. The method of claim 9, wherein the unicast address, the groupcast address, and the broadcast address are represented by a destination layer 2 identification.

11. A method for receiving a sidelink positioning message, performed by a receiving terminal, comprising:
receiving the sidelink positioning message carrying a serial number sent by a sending terminal.

12. The method of claim 11, wherein receiving the sidelink positioning message carrying the serial number sent by the sending terminal comprises:
receiving the sidelink positioning message carrying the serial number and a receiving address of the receiving terminal sent by the sending terminal;
wherein the receiving address is any one of: a unicast address, a groupcast address, or a broadcast address.

13. The method of claim 11, wherein receiving the sidelink positioning message carrying the serial number sent by the sending terminal comprises:
receiving the sidelink positioning message carrying the serial number and a receiving address of the receiving terminal sent by the sending terminal;
wherein the receiving address is a unicast address.

14. The method of claim 12 or 13, further comprising:
discarding the sidelink positioning message currently received, in response to receiving at least two sidelink positioning messages having the same serial number in a current positioning session.

15. The method of claim 12 or 13, further comprising:
discarding the sidelink positioning message currently received, in response to receiving at least two sidelink positioning messages having the same serial number and corresponding to a sending address of the same sending terminal and the same receiving address in a current positioning session.

16. The method of claim 12 or 13, further comprising:
discarding the sidelink positioning message currently received, in response to receiving at least two sidelink positioning messages having the same serial number and corresponding to the same receiving address in a current positioning session.

17. The method of claim 12 or 13, further comprising:
discarding the sidelink positioning message currently received, in response to receiving at least two sidelink positioning messages having the same serial number and corresponding to a sending address of the same sending terminal in a current positioning session.

18. The method of claim 11, further comprising:
deleting all serial numbers in a current positioning session when the current positioning session ends, in response to the receiving terminal being a terminal that initiates the current positioning session; or
deleting all serial numbers in a current positioning session, in response to the receiving terminal not being a terminal that initiates the current positioning session and the sending terminal not sending or receiving any sidelink positioning message within a preset duration.

19. The method of claim 11, wherein the receiving address is a device identification of the receiving terminal; or
the receiving address is any one of: a unicast address, a groupcast address, or a broadcast address.

20. The method of claim 19, wherein the unicast address, the groupcast address, and the broadcast address are represented by a destination layer 2 identification.

21. A communication apparatus, provided in a sending terminal, comprising:
a transceiver unit, configured to send the sidelink positioning message carrying a serial number to a receiving terminal.

22. A communication apparatus, provided in a receiving terminal, comprising:
a transceiver unit, configured to receive the sidelink positioning message carrying a serial number sent by a sending terminal.

23. A communication apparatus, comprising:
a processor; and
a memory for storing a computer program;
wherein the processor is configured to execute the computer program stored in the memory, to cause the apparatus to perform the method of any one of claims 1 to 10.

24. A communication apparatus, comprising:
a processor; and
a memory for storing a computer program;
wherein the processor is configured to execute the computer program stored in the memory, to cause the apparatus to perform the method of any one of claims 11 to 20.

25. A communication apparatus, comprising: a processor and an interface circuit; wherein the interface circuit is configured to receive code instructions and transmit the code instructions to the processor;
the processor is configured to execute the code instructions, to perform the method of any one of claims 1 to 10.

26. A communication apparatus, comprising: a processor and an interface circuit; wherein the interface circuit is configured to receive code instructions and transmit the code instructions to the processor;
the processor is configured to execute the code instructions, to perform the method of any one of claims 11 to 20.

27. A computer-readable storage medium for storing instructions, wherein when the instructions are executed, the method of any one of claims 1 to 10 is implemented.

28. A computer-readable storage medium for storing instructions, wherein when the instructions are executed, the method of any one of claims 11 to 20 is implemented.
